# EUROPÄISCHE PATENTSCHRIFT

(11) **EP 1 498 344 B1**
(45) Veröffentlichungstag und Bekanntmachung des Hinweises auf die Patenterteilung: **02.01.2008**
(21) Anmeldenummer: 04016393.3
(22) Anmeldetag: 13.07.2004
(51) Int. Cl.: B62D 21/15

(54) **Seitenaufprallschutzvorrichtung für eine Fahrzeug-Tragstruktur**
Side impact safety device for a support structure of a vehicle
Dispositif de protection en cas de choc latéral pour la structure portante d'un véhicule

(30) Priorität: 18.07.2003 DE 10332631
(43) Veröffentlichungstag der Anmeldung: 19.01.2005
(73) Patentinhaber: AUDI AG, 85045 Ingolstadt (DE)
(72) Erfinder: Winkler, Andreas, 74074 Heilbronn (DE)
(74) Vertreter: Patzelt, Heike Anna Maria

(56) Entgegenhaltungen:
- EP-A- 1 040 984
- EP-A- 1 205 377
- EP-A- 1 329 374
- DE-A1- 4 139 303

## Beschreibung

**Die Erfindung betrifft** eine Seitenaufprallschutzvorrichtung für eine Fahrzeug-Tragstruktur gemäss dem Oberbegriff des Patentanspruchs 1.

Aufgrund der sich fortlaufend verschärfenden Gesetze hinsichtlich eines Seitenaufpralls steigen die Anforderungen an die entsprechenden Fahrzeug-Tragstrukturen, insbesondere der Mittelsäulen, der Schweller, der Querträger und der Knotenelemente, die die Mittelsäule mit dem Schweller verbinden können, ständig an. Bestehende Konzepte stoßen in Bezug auf die notwendige Energieabsorption beim Seitenaufprall an ihre Grenzen.

In der DE 19743225 C2 wird als Seitenaufprallschutzvorrichtung ein Schweller offenbart, der aus zwei Teilen besteht, die zwei flanschförmige Flächen ausbilden, um die beiden Teile miteinander zu verbinden. Im Innern des Schwellers befindet sich ein Pralldämpfer, der die Energie bei einem Seitenaufprall aufnimmt, um zu verhindern, dass die Fahrgastzelle beschädigt wird.

**Nachteilig** bei einer solchen Seitenaufprallschutzvorrichtung ist es, dass zur Energieaufnahme separate Pralldämpfer verwendet werden müssen, die zusätzlich in die Schwellerstruktur eingebracht werden müssen, um zu verhindern dass der Schweller zerbricht.

In der DE 4139303 A1 wird eine Seitenaufprallschutzvorrichtung in Form einer Mittelsäule offenbart, die aus einem unteren Gussteil und einem oberen Blechteil besteht, die über eine Flanschfläche miteinander verbunden werden. Die Verbindung wird mittels Schweißen oder Kleben hergestellt. Das untere Längsteil ist ein Gussteil, das unempfindlich gegenüber dem Seitenaufprall ist. Das obere Längsteil ist ein Blechteil, das vom Seitenaufprall nicht so schwer betroffen ist wie das untere Längsteil.

**Nachteilig** an einem solchen Aufbau ist es, dass im unteren Längsteil, das ausschließlich von einem Gussteil gebildet wird, kein Platz vorhanden ist, um weitere Anbauteile, insbesondere Steuergeräte oder Sensoren, in der Säule anzubringen. Für einen solchen Aufbau wird ein großes Volumen benötigt.

Eine gattungsgemäße Seitenaufprallschutzvorrichtung ist aus der EP 1040984 A bekannt.

**Aufgabe der Erfindung** ist es, eine Seitenaufprallschutzvorrichtung aufzuzeigen, die so ausgebildet ist, dass sie bei einem geringen Gewicht und einem geringen Volumen die Fahrgastzelle zuverlässig schützt.

Die Aufgabe wird dadurch **gelöst**, indem die Seitenaufprallschutzvorrichtung ein Gussteil aufweist, das mit einer Abdeckung über Verbindungselemente verbunden wird. Da die Verbindungselemente im Gussteil angeordnet sind, weist das Gussteil im Verbindungsbereich lokale Wandstärkenerhöhungen auf, die die Kerbwirkung der Verbindungselemente am Gussteil bei einem Seitenaufprall reduzieren.

Der **Vorteil der Erfindung** ist es, dass Gussteile, die eine lokale Wandstärkenerhöhung aufweisen über Verbindungselemente, insbesondere Schrauben und Nieten, genauso fest mit einer Abdeckung verbunden werden können, wie bei einer Schweißverbindung. Das heißt ein solches Gussteil (mit lokaler Wandstärkenerhöhung) ist trotz der Materialschwächung bedingt durch die Löcher für die Verbindungselemente zum Verschrauben oder Vernieten mit einer Abdeckung, genauso belastbar wie ein Gussteil (ohne lokale Wandstärkenerhöhung), das keine Löcher aufweist und in der späteren Verarbeitung mit einer Abdeckung verschweißt wird. Ein weiterer Vorteil besteht darin, dass in einem Hohlraum zwischen Abdeckung und Gussteil weitere Anbauteile stressfrei, das heißt ohne thermische Belastung, untergebracht werden können und sogar z.B. bei Verwendung von

Schrauben ausgetauscht werden können. Zudem lässt sich das Versagensverhalten der Gussteile in der Berechnung genauer vorhersagen. Derartige Seitenaufprallschutzvorrichtungen sind leicht, stabil und weisen aufgrund des Hohlraums ein geringes Volumen auf.

**Vorteilhafte Weiterbildungen** ergeben sich aus den Unteransprüchen. Hierbei besteht das Gussteil für die Seitenaufprallschutzvorrichtung aus Gewichtsgründen aus Aluminium. Jedoch können solche Gussteile auch aus anderen Leichtmetallen oder Stahl hergestellt werden. Derartige Gussteile mit einer oder mehreren lokalen Wandstärkenerhöhungen im Bereich der Verbindungselemente, eignen sich in besonderem Maße als Bestandteil einer Mittelsäule, eines Schwellers, eines Sitzquerträgers oder eines Knotenelements für Karosserieträger. Durch solche verschraubten oder vernieteten Gussteile lassen sich Hohlprofile herstellen, die an den für einen Seitenaufprall relevanten Stellen so verstärkt und gespannt sind, dass eine Beschädigung des Fahrgastraums verhindert werden kann. Andererseits bilden sie einen Hohlraum aus, in den weitere Anbauteile untergebracht werden können.

Das nachfolgende Ausführungsbeispiel soll anhand der Figuren 1 bis 3 näher beschrieben werden.

Es zeigen:
- **Figur 1:**: Seitenaufprallschutzvorrichtung mit einem Gussteil, das lokale Wandstärkenerhöhungen aufweist.
- **Figur 2:**: Seitenaufprallschutzvorrichtung im Bereich eines Verbindungselements.
- **Figur 3:**: Vergleichsdiagramm zwischen Seitenaufprallschutzvorrichtung mit einem Gussteil ohne lokaler Wandstärkenerhöhung und mit lokaler Wandstärkenerhöhung.

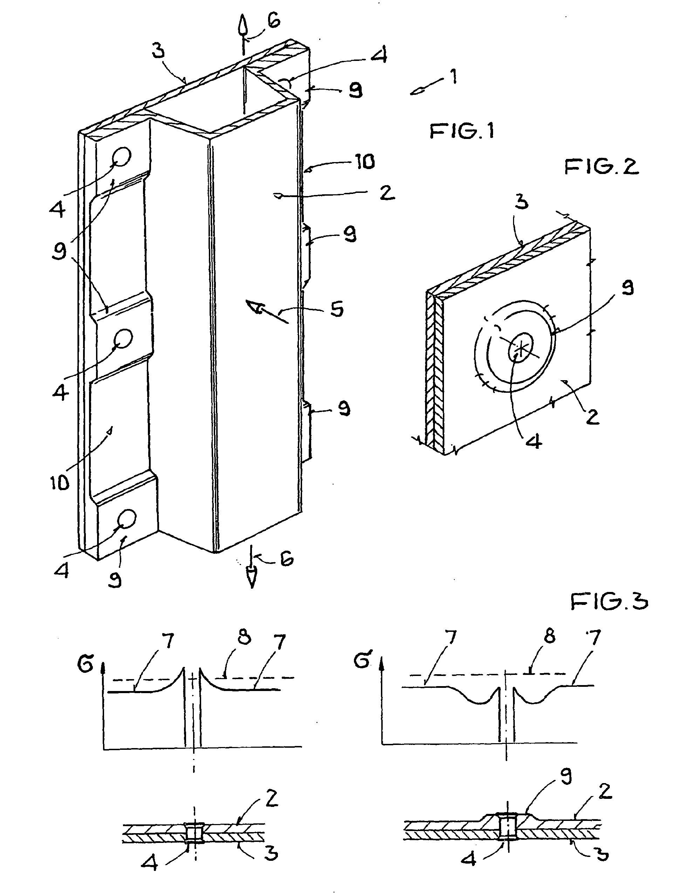

**Figur 1** zeigt eine Seitenaufprallschutzvorrichtung **1**, die in einer Fahrzeug-Tragstruktur integrierbar ist. Eine solche Seitenaufprallschutzvorrichtung **1** kann Bestandteil eines Schwellers, einer Mittelsäule, eines Querträgers, insbesondere eines Sitzquerträgers, oder eines Knotenelementes sein, an dem mehrere Träger zusammenlaufen. Die Seitenaufprallschutzvorrichtung **1** besteht aus einem metallenen Gussteil **2**, das im Ausführungsbeispiel aus Aluminium besteht. Weitere Bestandteile der Seitenaufprallschutzvorrichtung **1** ist die metallene Abdeckung **3**, die mit dem Gussteil **2** verbunden wird. Bei der Abdeckung **4** handelt es sich vorzugsweise um ein Metallblechteil jedoch können auch andere Materialien oder aber ein weiteres Gussteil verwendet werden. Die Verbindung wird mittels Verbindungselemente **4** hergestellt. Bei den Verbindungselementen **4** handelt es sich beispielsweise um Nieten und Schrauben. Die Verbindungselemente können beispielsweise die Wand des Gussteils ganz durchdringen oder alternativ nur in einen Wandbereich ragen, z.B. wenn die Wand des Gussteils als Halterung dient. Am Gussteil **2** sind im Ausführungsbeispiel zwei Flansche **10** ausgebildet, die auf der metallenen Abdeckung **3** aufliegen. An den Flanschen **10** erfolgt auch das Verbinden mittels der Verbindungselemente **4.** Im Bereich der Verbindungselemente **4** weist der Flansch **10** des Gussteils **2** eine dickere Wandstärke auf. Der Grund für die lokale Wandstärkenerhöhung **9** liegt darin, dass beim Verbinden von Gussteilen **2** mit anderen Bauteilen **3** mittels z. B. Nieten oder selbstfurchenden Schrauben **4** im Bereich dieser Nieten und Schrauben **4** bei Belastung lokal hohe Spannungsspitzen auftreten können, wenn die beiden verbundenen Bauteile **2, 3** auf Zug oder Schub belastet werden. Diese Zugbelastungen **6** führen oftmals zum Versagen der Gussteile **2**, obwohl die eigentliche Belastungsgrenze der Bauteile noch nicht erreicht ist. Das Loch im Gussteil **2** in dem das Verbindungselement **4** angeordnet ist, führt zu einer Materialschwächung in diesem Bereich.

Durch die lokale Wandstärkenerhöhung **9** am Gussteil erweist sich die Seitenaufprallschutzvorrichtung **1** als besonders stabil bei einem Seitenaufprall **5**, der seitlich auf das Gussteil **2** einwirkt. Würde das Gussteil **2** allein als Seitenaufprallschutzvorrichtung **1** dienen, würde es bei einem Seitenaufprall **5** an der Aufprallstelle zusammenknicken, so dass sich der Fahrgastraum signifikant verkleinern würde. Die Abdeckung **3** verhindert dies, wobei die Abdeckung **3** nicht nur hauptsächlich zum Abdecken des Hohlraums dient, sondern das Gussteil **2** verspannt. Die Abdeckung **3** kann das Abknicken des Gussteils **2** nur zuverlässig verhindern, wenn die Verbindung zwischen dem Gussteil **2** und der Abdeckung **3** zuverlässig dem Seitenaufprall standhält. Um zu verhindern, dass eine Ablösung von Gussteil **2** und Abdeckung **3** zustande kommt, muss einerseits gewährleistet sein, dass die Verbindung bzw. die Verbindungselemente **4** den Kräften, die bei einem Seitenaufprall **5** auf sie einwirken, standhalten. Genauso wichtig ist es aber auch, dass das Gussteil **2** bzw. die Abdeckung **3** sich nicht von der Verbindung lösen können. Dies kann durch eine Materialschwächung im Gussteil, bedingt durch das Loch, in dem das Verbindungselement **4** angeordnet ist, verursacht werden. Um der Materialabschwächung im Bereich des Verbindungselemente **4** entgegenzuwirken, wird die Wandstärke in diesem Bereich erhöht, d.h. im Bereich der Materialschwächung bedingt durch das Loch für das Verbindungselement befindet sich auch eine Materialverstärkung bedingt durch die lokale Wandstärkenerhöhung, die der Schwächung entgegenwirkt. Das heißt, dass bei einem Seitenaufprall **5** und damit bei einer Belastung der Verbindungsstelle zwischen Verbindungselement **4** und Gussteil **2** die Kerbwirkung der Verbindungselemente **4** stark reduziert werden kann, weil sich die Kräfte über eine größere Fläche verteilen. Das Gussteil kann im Bereich der Verbindungselemente **4** nicht mehr aufgeschlitzt werden oder einreißen. Das heißt, dass das Gussteil **2** formschlüssig am Verbindungselement **4** bleibt und eine Ablösung des Gussteils **2** nicht möglich ist. Wird die Wandstärke im Bereich der Verbindungsstellen erhöht, kann ein mit anderen Bauteilen **3** verbundenes Gussteil **2** ähnlich hohe Lasten aufnehmen, wie ein verschweißtes bzw. geklebtes Gussteil. Zudem lässt sich das Versagensverhalten der Gussteile **2** in der Berechnung genauer vorhersagen.

Figur **2** zeigt einen Ausschnitt einer Seitenaufprallschutzvorrichtung **1** aus Figur **1** im Bereich der Verbindungsstelle. Hierbei bildet der Flansch **10** des Gussteils **2** auf seiner Unterseite die Auflagefläche aus, die mit der Abdeckung **3** in Verbindung steht. In dieser Abbildung befindet sich in der Mitte im dargestellten Flanschbereich **10** das Verbindungselement **4**, das das Gussteil **2** mit der Abdeckung **3** verbindet, wobei in der näheren Umgebung des Verbindungselements **4** das Gussteils **2** eine lokale Wandstärkenerhöhung **9** aufweist. Der Übergang zwischen der regulären Wandstärke und der maximalen Wandstärkenerhöhung im Bereich des Verbindungselements **4** kann sowohl kontinuierlich, wie dargestellt, sowie auch abrupt sein. Mit der Wandstärkenerhöhung **9** wird verhindert, dass das Loch in dem das Verbindungselement **4** im Gussteil **2** angeordnet ist, seitlich aufgeschlitzt wird, wenn im Gussteil **2** aufgrund des Seitenaufpralls **5** Spannungen entstehen.

**Figur 3** zeigt den Spannungsverlauf in einer Anordnung nach Figur 2 mit und ohne Wandstärkenerhöhung. Unten in der Figur 3 ist die jeweilige Anordnung, auf die sich das darrüberstehende Diagramm bezieht, schematisch darstellt. Auf der linken unteren Seite sieht man ein Gussteil **2**, das keine lokale Wandstärkenerhöhung aufweist und das über ein Verbindungselement **4** an einer Abdeckung **3** befestigt ist. Das darrüberliegende, dazugehörige Spannungsdiagramm zeigt den Spannungsverlauf **7** im Gussteil **2** einer solchen Anordnung. Hierbei ist mit der gestrichelten Linie **8** die Maximalspannung dargestellt, die wenn sie überschritten wird, zum Versagen des Bauteils **2** führen kann. Wie aus dem linken Diagramm ersichtlich wird diese maximal ertragbare Spannung des Gussteils **2** im Bereich des Lochs, in dem sich das Verbindungselement **4** befindet, überschritten. Im Außenbereich ist der Spannungsverlauf **7** unterhalb dieser Grenze, sodass eine Beschädigung des Gussteils **2** nur im unmittelbaren Bereich des Verbindungselements **4** auftreten kann. Um ein Versagen des Gussteils **2** zuverlässig zu verhindern, müsste man im Falle einer gleichbleibenden Wandstärke die Materialdicke des ganzen Gussteils **2** erhöhen, wodurch ein höheres Gewicht und ein größeres Volumen des Bauteils in Kauf genommen werden müsste. Im danebenstehenden Diagramm, das den Spannungsverlauf **7** mit Wandstärkenerhöhung im Bereich des Verbindungselements **4** darstellt, wird deutlich, dass die Spannungsspitzen, die im Bereich des Lochs an dem das Verbindungselement **4** angeordnet ist, durch die Wandstärkenerhöhung tiefergelegt werden konnten, sodass sie unterhalb der maximal ertragbaren Spannung **8** des Gussteils **2** angeordnet sind. Durch eine entsprechende Formgebung der Wandstärkenerhöhung kann ein nahezu kontinuierlicher Spannungsverlauf **7** erzeugt werden, bei dem gewährleistet ist, dass die zulässige Maximalspannung **8** niemals überschritten wird.

## Patentansprüche

1. Seitenaufprallschutzvorrichtung (1) für eine Fahrzeug-Tragstruktur bestehend aus
- einem metallenen Gussteil (2), das mindestens einen Flansch (10) aufweist,
- einer Abdeckung (3) und
- Verbindungselementen (4), insbesondere Schrauben und Nieten, die das Gussteil (2) am Flansch (10) mit der Abdeckung (3) verbinden, **dadurch gekennzeichnet, dass**
- der Flansch (10) am Gussteil (2) lokale Wandstärkenerhöhungen (9) aufweist und
- die Wandstärkenerhöhungen (9) im Bereich der Verbindungselemente (4) angeordnet sind, um die Kerbwirkung der Verbindungselemente (4) am Gussteil (2) bei einem Seitenaufprall (5) zu reduzieren.

2. Seitenaufprallschutzvorrichtung (1) nach Patentanspruch 1, **dadurch gekennzeichnet, dass** das Gussteil(2) aus Aluminium ist.

3. Seitenaufprallschutzvorrichtung (1) nach Patentanspruch 1, **dadurch gekennzeichnet, dass** das Gussteil (2) Bestandteil der Mittelsäule ist.

4. Sietenaufprallschutzvorrichtung (1) nach Patentanspruch 1, **dadurch gekennzeichnet, dass** das Gussteil (2) Bestandteil des Schwellers ist.

5. Seitenaufprallschutzvorrichtung (1) nach Patentanspruch 1, **dadurch gekennzeichnet, dass** das Gussteil (2) Bestandteil eines Sitzquerträgers ist.

6. Seitenaufprallschutzvorrichtung (1) nach Patentanspruch 1, **dadurch gekennzeichnet, dass** das Gussteil (2) Bestandteil eines Knotenelements ist, an dem verschiedene Karosserie-Träger zusammentreffen.

## Claims

1. Side impact safety device (1) for a vehicle bearer structure, consisting of
- a metal cast component (2) that has at least one flange (10),
- a cover (3) and
- connecting elements (4), especially screws or rivets, which connect the cast component (2) at its flange (10) with the cover (3),
**characterised in that**
- the flange (10) has locally thickened wall sections (9) on the cast component (2) and
- the thickened wall sections (9) are arranged in the region of the connecting elements (4) in order to reduce the notch weakening effect of the connecting elements (4) at the cast component (2) in the event of a side impact (5).

2. Side impact safety device (1) according to patent claim 1, **characterised in that** the cast component (2) is made of aluminium.

3. Side impact safety device (1) according to patent claim 1, **characterised in that** the cast component (2) is a component part of the central pillar.

4. Side impact safety device (1) according to patent claim 1, **characterised in that** the cast component (2) is a component part of the sill.

5. Side impact safety device (1) according to patent claim 1, **characterised in that** the cast component (2) is a component part of a transverse seat strut.

6. Side impact safety device (1) according to patent claim 1, **characterised in that** the cast component (2) is a component part of a junction element at which several chassis bearers converge.

## Revendications

1. Dispositif de protection en cas de choc latéral (1) pour une structure portante d'un véhicule constitué par
- une pièce métallique coulée (2), qui présente au moins une bride (10),
- un recouvrement (3) et
- des éléments de liaison (4), en particulier des vis et des rivets, qui relient la pièce coulée (2) au niveau de la bride (10) au recouvrement (3), **caractérisé en ce que**
- la bride (10) présente au niveau de la pièce coulée (2) des augmentations locales de l'épaisseur de paroi (9) et
- les augmentations de l'épaisseur de paroi (9) sont disposées dans la zone des éléments de liaison (4) pour réduire l'effet d'entaille des éléments de liaison (4) au niveau de la pièce coulée (2) lors d'un choc latéral (5).

2. Dispositif de protection en cas de choc latéral (1) selon la revendication 1, **caractérisé en ce que** la pièce coulée (2) est en aluminium.

3. Dispositif de protection en cas de choc latéral (1) selon la revendication 1, **caractérisé en ce que** la pièce coulée (2) fait partie de la colonne centrale.

4. Dispositif de protection en cas de choc latéral (1) selon la revendication 1, **caractérisé en ce que** la pièce coulée (2) fait partie du seuil.

5. Dispositif de protection en cas de choc latéral (1) selon la revendication 1, **caractérisé en ce que** la pièce coulée (2) fait partie d'une traverse de siège.

6. Dispositif de protection en cas de choc latéral (1) selon la revendication 1, **caractérisé en ce que** la pièce coulée (2) fait partie d'un élément nodal, au niveau duquel se rencontrent différents supports de carrosserie.
